# EUROPEAN PATENT SPECIFICATION

(11) **EP 1 535 555 B1**
(45) Date of publication and mention of the grant of the patent: **12.07.2006**
(21) Application number: 04425371.4
(22) Date of filing: 21.05.2004
(51) Int. Cl.: A47J 36/24

(54) **Electric bread warmer device**
Elektrischer Brotkorb
Panier électrique

(30) Priority: 28.11.2003 IT BS20030072 U
(43) Date of publication of application: 01.06.2005
(73) Proprietor: DBD Srl, 50040 Settimello di Calenzano (Firenze) (IT)
(72) Inventor: Bernardini, Leandro, 50040 Settimello di Calenzano (FI) (IT)
(74) Representative: Sangiacomo, Fulvia

(56) References cited:
- WO-A-96/22718
- FR-A- 2 831 043
- GB-A- 600 132

## Description

### Field of the Invention

This invention concerns a bivalent kitchen container in the form of a basket or tray, in particular to contain and warm bread or oven products in general.

### State of the Art

Edible oven products such as bread, croissants, biscuits and the like acquire freshness and added fragrance when they are warm, and even bread when no longer fresh or even deep frozen can gain freshness and become tastier if warm when consumed.

GB 600 132 A discloses an electric bread warmer device comprising a tray which can be separated from a base, wherein the latter contains all the electrical equipment and connections, such that these are not an impediment to the independent use of the tray.

### Objects of the Invention

One of the objects of this invention is to propose and provide an electric device for household use to warm bread and oven products in general, according to needs.

A further object of the invention is to propose a bread warmer in the shape of a basket or a tray which, though intended as an electric heater, can be picked up, handled and placed on the table without any attachment, such as an electric power cable, which could interfere with movements or which requires prior windind or camouflaging.

Another object of the invention is to provide a kitchen container with dual use in that it can easily be used both for warming bread and the like and as a normal basket or tray without any particular tie to hold and serve bread at table.

These objectives are achieved, according to the invention, with an electric bread warmer device in compliance with claim 1

### Brief Description of the Drawings

The invention will be described in detail below making reference to the attached illustrative drawings, in which:

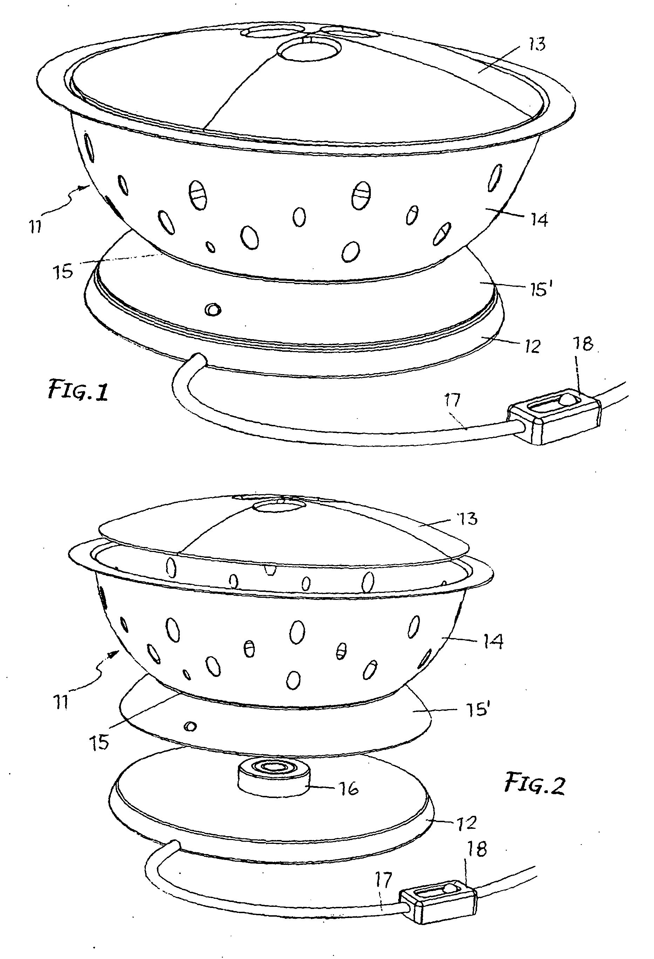

Fig. 1 shows the device equipped for heating on an associated base, and
Fig. 2 shows the device separated from the associated base to be used as a bread basket.

### Detailed Description of the Invention

As shown, the warming device proposed here comprises a body in the form of a basket or tray 11, designed to receive the product to be warmed, and an associated base 12 for an electric connection.

The basket or tray 11 can be of any shape or size and equipped with its own lid 13. It has a containing side wall 14 and bottom wall 15. The basket or tray 11 can be made with a completely metal body, such as stainless steel, with at least the side wall 14 partially perforated. In alternative, the body of the basket or tray 11 may be made with a side wall made of plastic or wicker or such like, but always and however a bottom wall 15 made of metal such as steel or aluminium. In each of the possibilities, a plastic insulating protective element 15' is attached externally to the bottom wall 15.

In any case, under the bottom metal wall 15, a heating system is applied, which can be an electric resistor or induction heater, to which a female electric connector is connected sustained by the plastic protective element 15'. On the other side, on the associated base 12, which is made of plastic, a male electric connector 16 is fixed which is attached to the end of a power cable 17 equipped with a switch 18 and a terminal plug which can be inserted into a corresponding socket part of the electric wiring system. The male and female connectors are well known in themselves and can be of the coaxial type.

With the device described above, bread or other products to be warmed is placed in the basket or tray 11 and this is positioned on the associated base 12, where the male and female electric connectors are joined. Then, by connecting the electric cable to the mains using the relative switch, the heating system in the bottom of the basket or tray becomes powered, thus warming the contents as required. After heating, the basket or tray can be held, lifted and separated from the associated base and placed on the table, or where required, without having to transfer either the base 12 or let alone the electric cable 17 connected to it, which furthermore can remain connected to the mains, remembering of course to switch off.

## Claims

1. Electric bread warmer device, comprising a body in a shape of a basket or tray (11) having a bottom wall (15) provided with an electric heating system electrically connectable to an associated base (12) equipped with a cable (17) to be connected to the mains electric system, **characterised in that** said body in the shape of a basket or tray (11) can be separated both physically and electrically from said (12) base to be moved away from the latter without the electric cable (17) being an impediment **in that** said cable remains attached to said base.

2. Electric device according to claim 1, in which between the electric heating system under the bottom wall (15) of the body in the shape of basket or tray (11) and the associated base (12) separable means of electric connection are provided for when the basket or tray (11) is separated from said base 12, said means being made up of two coaxial type matching connectors (16).

3. Electric device according to claims 1 and 2, in which the basket or tray (11) has a completely metal body with a perforated or integral side wall (14) and a bottom wall (15) containing the heating system.

4. Electric device according to claims 1 and 2, in which the basket or tray (11) has a body with a plastic perforated or integral side wall (14) and a metal bottom wall (15) containing the heating system.

5. Electric device according to claims 1 and 2, in which the basket or tray (11) has a body with a wicker or suchlike side wall (14) and a metal bottom wall (15) containing the heating system.

6. Device according to any of the previous claims, in which an insulating protective element (15') is fixed to the bottom wall (15) and in which a centrally attached female electric connector is fixed to said element, whereas a male electric connector (16) is attached to the base (12).

## Patentansprüche

1. Elektrischer Brotwärmer, bestehend aus einem Körper in Korb- oder Plattenform (11) mit einer Rückwand (15), welche mit einem elektrischen Heizsystem ausgerüstet und elektrisch mit einem zugeordneten Unterbau (12), der mit einem Kabel (17) an ein Stromspeisenetz angeschlossen werden kann, verbindbar ist, er zeichnet sich **dadurch** aus, dass der besagte Körper in Korb- oder Plattenform (11) sowohl körperlich als auch elektrisch von dem genannten Unterbau (12), um ihn von demselben zu entfernen, getrennt werden kann, ohne dass das elektrische Kabel (17) dabei eine Behinderung darstellt, da das genannte Kabel mit dem genannten Unterbau verbunden bleibt.

2. Elektrisches Gerät nach Patentanspruch 1, bei dem zwischen dem elektrischen Heizsystem unter der Rückwand (15) des Körpers in Korb- oder Plattenform (11) und dem zugeordneten Unterbau (12) elektrische Verbindungsmittel vorgesehen sind, wenn der Korb oder die Platte (11) von der besagten Basis (12) getrennt ist, da die genannten Mittel aus zwei zusätzlichen koaxialen Steckern (16) bestehen.

3. Elektrisches Gerät nach den Patentansprüchen 1 und 2, bei dem der Korb oder die Platte (11) einen Körper mit einer gelochten oder ganzen metallenen Seitenwand (14) und einer das Heizsystem tragenden Rückwand (15) hat.

4. Elektrisches Gerät nach den Patentansprüchen 1 und 2, bei dem der Korb oder die Platte (11) einen Körper mit einer gelochten oder ganzen Seitenwand (14) aus Kunststoff, und einer das Heizsystem tragenden metallenen Rückwand (15) hat.

5. Elektrisches Gerät nach den Patentansprüchen 1 und 2, bei dem der Korb oder die Platte (11) einen Körper mit einer Seitenwand (14) aus Weide und einer das Heizsystem tragenden metallenen Rückwand (15) hat.

6. Elektrisches Gerät nach irgendeinem der vorstehenden Patentansprüche, bei dem sich an der Rückwand (15) ein isolierendes Schutzelement (15') mit einer in der Mitte angebrachten elektrischen Verbindungsbuchse befindet, während an der Basis (12) ein Verbindungsstecker (16) befestigt ist.

## Revendications

1. Appareil chauffe pain électrique comprenant un corps en forme de panier ou de plateau (11) ayant une paroi de fond (15) dotée d'un système chauffant électrique connectable électriquement à une base associée (12) munie d'un fil (17) à brancher à un réseau d'alimentation électrique, **caractérisé en ce que** ledit corps en forme de panier ou de plateau (11) peut être séparé tant physiquement qu'électriquement de ladite base (12) pour être éloigné de celle-ci sans que le fil électrique (17) soit un empêchement du fait que ledit fil demeure attaché à la base.

2. Appareil électrique selon la revendication 1, dans lequel, entre le système chauffant électrique sous la paroi de fond (15) du corps en forme de panier ou de plateau (11) et la base associée (12), des moyens de connexion électrique sont fournis pour le moment où le panier ou plateau (11) est séparé de ladite base (12), lesdits moyens étant constitués de deux connecteurs correspondants de type coaxial (16).

3. Appareil électrique selon les revendications 1 et 2, dont le panier ou le plateau (11) a un corps entièrement en métal avec une paroi latérale trouée ou entière (14) et une paroi de fond (15) contenant le système chauffant.

4. Appareil électrique selon les revendications 1 et 2, dont le panier ou le plateau (11) a un corps avec une paroi latérale en matière plastique trouée ou entière (14) et une paroi de fond en métal (15) contenant le système chauffant.

5. Appareil électrique selon les revendications 1 et 2, dont le panier ou le plateau (11) a un corps avec une paroi latérale (14) en osier ou similaire et une paroi de fond en métal (15) contenant le système chauffant.

6. Appareil selon n'importe laquelle des revendications précédentes, dont un élément protecteur isolant (15') est fixé à la paroi de fond (15) et dont un connecteur électrique femelle est fixé en position centrale audit élément alors qu'un connecteur mâle (16) est fixé à la base (12).
